# EUROPÄISCHE PATENTANMELDUNG

(11) **EP 1 022 831 A1**
(43) Veröffentlichungstag der Anmeldung: **26.07.2000**
(21) Anmeldenummer: 98811266.0
(22) Anmeldetag: 24.12.1998
(51) Int. Cl.: H02B 1/56

(54) **Abschnitt einer Hochspannungsanlage mit Kühlmitteln**

(71) Anmelder: ABB Hochspannungstechnik AG, 8050 Zürich (CH)
(72) Erfinder: Wilfert, Günter, 83626 Valley (DE); Kübler, Günter, 8032 Zürich (CH); Von Wolfersdorf, Jens, Dr., 5417 Untersiggenthal (CH)
(74) Vertreter: ABB Patent Attorneys

(57) **Zusammenfassung**

Der vorzugsweise als Generatorschalter ausgebildete Abschnitt der elektrischen Hochspannungsanlage weist mindestens zwei jeweils einen Stromleiter (L) aufnehmende Gehäuse (1R, 1S, 1T) auf Die Gehäuse sind an Gehäuseseitenwänden unter Bildung eines vertikal ausgerichteten Kanals (RS) mit Abstand voneinander angeordnet. In dem Kanal ist eine parallel zu den Seitenwänden geführte Zwischenwand (Z) angeordnet.

Bei diesem Abschnitt wird in den Stromleitern (L) gebildete und an die Gehäuseseitenwände geführte Verlustwärme in Form von Strahlungsenergie auf die Zwischenwand (Z) übertragen und durch Konvektion über den Kanal (RS) aus der Anlage entfernt. Die Anlage kann so mit sehr hohen Betriebsströmen belastet werden.

## Beschreibung

### Technisches Gebiet

Die Erfindung bezieht sich auf einen Abschnitt einer elektrischen Hochspannungsanlage nach dem Oberbegriff von Anspruch 1. Diese Anlage ist zum Übertragen grosser elektrischer Leistung im Mega- bis Gigawattbereich geeignet. Die hierbei auftretenden Ströme bzw. Spannungen liegen im kA- bzw. kV-Bereich. Diese Anlage kann als mehrphasige Generatorableitungen ausgebildete Abschnitte aufweisen, in denen in den einzelnen Phasen typischerweise Betriebsströme zwischen 5 und 30 kA und Betriebsspannungen von beispielsweise 15 oder 21 kV auftreten. In solchen Abschnitten tritt infolge von verhältnismässig grossen Stromverlusten eine starke Erwärmung auf. Eine besonders starke Erwärmung tritt in Abschnitten auf, in denen der Strom durch einen Kontaktübergang, etwa eine Schaltstelle, geführt wird. Solche Schaltstellen sind im allgemeinen Generatorschalter.

### Stand der Technik

Generatorschalter der unteren und mittleren Leistungsklasse werden über natürliche Konvektion und Strahlung gekühlt. Sind solche Schalter ungekapselt ausgeführt, so wird die Verlustleistung des Stromleiters in Form von Wärme auf einen die Kontaktanordnung des Schalters enthaltenden Löschkammerisolator mit vertikal geführten Kühlrippen übertragen. Die vom Löschkammerisolator aufgenommene Wärme wird durch Konvektion und Strahlung an die Umgebung abgegeben. Solche Generatorschalter werden von der Firma ABB High Voltage Technologies Ltd. Zürich/Switzerland mit der Typenbezeichnung HEI 1 ...HEI 5 vertrieben. Darüber hinaus vertreibt die vorgenannte Firma mit der Typenbezeichnung HEC3/HEC4 auch Generatorschalter, bei denen der Stromleiter und der Löschkammerisolator in einem mit Isoliergas, insbesondere mit Luft, gefüllten Gehäuse angeordnet sind. Die im Stromleiter gebildete und überwiegend an den Löschkammerisolator geführte Wärme wird dann über natürliche Konvektion und Strahlung an das Gehäuse abgegeben. Die Wärmeabgabe erfolgt dabei durch die sich einstellenden Temperaturunterschiede zwischen Stromleiter bzw. Löschkammerisolator und Gehäuse. Die vom Gehäuse aufgenommene Wärme wird über natürliche Konvektion und Strahlung an die Umgebung aufgrund des Temperaturunterschiedes zwischen Gehäuse und Umgebung abgeführt. Der Wärmefluss in einem solchen System stellt sich von selbst ein, ist hauptsächlich von geometrischen Abmessungen, verwendeten Materialien und Oberflächenkonfigurationen abhängig und wird durch die Mechanismen der Wärmeabgabe limitiert. Ist der Generatorschalter dreiphasig ausgebildet, wobei die drei Phasen nebeneinander angeordnet sind, so weist das Gehäuse der in der Mitte angeordneten Phase immer die höchsten Temperaturen auf, da die Seitenwände dieses Gehäuses keine Strahlungsenergie abgeben können. Das Gehäuse muss dann besonders intensiv gekühlt werden.

### Darstellung der Erfindung

Es stellt sich deshalb die Aufgabe, einen Abschnitt für eine Hochspannungsanlage der eingangs genannten Art derart weiterzubilden, dass er trotz des Einsatzes einfacher Kühlmittel und bei geringen geometrischen Abmessungen sehr hohe Anlagenströme führen kann.

Diese Aufgabe wird vom Anlagenabschnitt gemäss den Patentansprüchen erfüllt.

Erfindungsgemäss weist der vorzugsweise als Generatorschalter ausgebildete Abschnitt der Hochspannungsanlage einen von zwei Seitenwänden zweier benachbarter Gehäuse gebildeten, vertikal ausgerichteten Kanal auf sowie eine in diesem Kanal angeordnete Zwischenwand. Durch diese Massnahmen wird erreicht, dass die durch elektrische Verluste in den Stromleitern gebildete und durch Konvektion, Strahlung oder forcierte Strömung an die Seitenwände der Gehäuse geführte Wärme infolge der Kaminwirkung des Kanals und der Aufnahme von Strahlungsenergie durch die Zwischenwand rasch von den Gehäusen entfernt wird. Die Anlage wird so äusserst wirkungsvoll gekühlt und es können grössere Betriebsströme als bei vergleichbaren Anlagen nach dem Stand der Technik mit den gleichen geometrischen Abmessungen geführt werden. Zusätzliche Kühlung wird durch eine oder mehrere ausserhalb der Gehäuse angebrachte und vorzugsweise als Gebläse ausgebildete Strömungsquelle(n) erreicht.

Da durch die Zwischenwand der Volumenstrom und damit die Kaminwirkung bzw. die Leistung der aussenliegenden Strömungsquelle(n) verringert wird, sollte der Kanal eine solche Breite aufweisen, dass der durch den Kanal geführte Volumenstrom nicht gestört und die ihn bildende Luft nicht zu stark aufgeheizt wird.

Eine besonders gute Wärmeabgabe der Zwischenwand an den infolge Konvektion und/oder der zusätzlichen Strömungsquellen aufsteigenden Luftstrom wird durch in die Zwischenwand eingeformte oberflächenvergrössernde Mittel erreicht. Solche Mittel können vertikal geführte Wellen und/oder Längsrippen umfassen, können aber auch eine parallel zur Zwischenwand geführte weitere Zwischenwand umfassen, welche in besonders vorteilhafter Weise mit der Zwischenwand durch vertikal geführte Längsrippen verbunden sein kann.

### Kurze Beschreibung der Zeichnungen

Weitere Vorteile und Anwendungen der Erfindung ergeben sich aus der nun folgenden Beschreibung anhand der Figuren. Dabei zeigen:
Figuren 1 und 2 jeweils eine Aufsicht auf einen quer zu den Stromleitern geführten Schnitt durch zwei erfindungsgemäss ausgeführte Abschnitte einer dreiphasig ausgebildeten Hochspannungsanlage, und die
Figuren 3 bis 5 jeweils eine Draufsicht auf den Anlagenabschnitt nach Fig. 1.

### Weg zur Ausführung der Erfindung

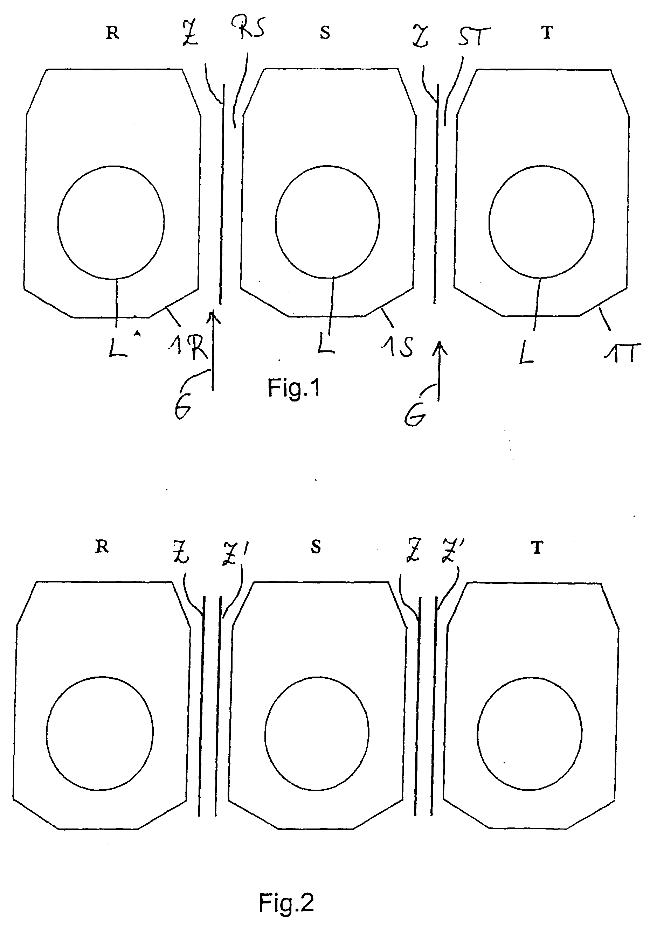

In allen Figuren bezeichnen gleiche Bezugszeichen auch gleichwirkende Teile. In den Figuren 1 und 2 ist ein dreiphasig ausgeführter Abschnitt einer als Generatorschalter ausgebildeten Hochspannungsanlage mit Phasen R, S und T dargestellt, welche jeweils einem Schalterpol des Generatorschalters zugeordnet sind. Jeder Schalterpol weist ein vorzugsweise metallenes, auf Erdpotential befindliches und mit einem Isoliergas, wie vorzugsweise Luft, gefülltes Gehäuse 1R, 1S und 1T von kastenförmigem Profil auf In jedem Gehäuse ist ein unter Bildung eines elektrischen Isolationsabstandes vom Gehäuse auf nicht dargestellten Stützisolatoren gehaltener Stromleiter L angeordnet, welcher senkrecht zur Zeichenebene nach oben und unten geführt ist.

Typischerweise führt der Stromleiter L Betriebsströme zwischen 5 und 30 kA bei Betriebsspannungen von 10 bis 36 kV. Infolge ohmscher Verluste, welche insbesondere an Kontaktübergängen beträchtlich sein können, erwärmen sich die Stromleiter L erheblich. Die in den Stromleitern gebildete Wärme wird über natürliche Konvektion und Strahlung an die Gehäuse 1R, 1S und 1T abgegeben. Um die Wärmeabgabe durch Konvektion zu begünstigen, können in den Gehäusen als Gebläse ausgebildete Strömungsquellen enthalten sein, welche die in den Stromleitern L gebildete Wärme durch Ausbildung einer forcierten Strömung an die Wand der Gehäuse führen. Die beiden aussenliegenden Gehäuse 1R und 1T können diese Wärme an freien Seitenwänden durch Konvektion und durch Strahlung nach aussen abgeben. Das mittlere Gehäuse 1S ist zwischen den beiden anderen Gehäusen 1R und 1T angeordnet. Wärmeabgabe durch Konvektion und Strahlung ist bei diesem Gehäuse daher sehr eingeschränkt.

Die Wärmeabgabe des Gehäuses 1S wird dadurch erhöht, dass die drei Gehäuse 1R, 1S und 1T unter Bildung vertikal ausgerichteter Kanäle RS und ST mit Abstand zueinander angeordnet sind. An die Seitenwände des Gehäuses 1S geführte Wärme wird durch die Kaminwirkung der Kanäle RS und ST weggeführt. Zusätzlich ist eine parallel zu den begrenzenden Seitenwänden der benachbarten Gehäuse 1R und 1S bzw. 1S und 1T geführte Zwischenwand Z im Kanal RS bzw. ST angeordnet sein. In dieser Zwischenwand werden keine Verluste erzeugt und kann sich so ein Temperaturunterschied zwischen den begrenzenden Gehäuseseitenwänden und der Zwischenwand Z einstellen. Somit kann von den Gehäuseseitenwänden an die Zwischenwand Z Strahlungsenergie abgegeben werden. Die durch die Strahlungsenergie erwärmte Zwischenwand wird durch freie Konvektion der Umgebungsluft gekühlt. Die zusätzliche Wärmeabfuhr beträgt bis zu ca. 10 % der Gesamtverlustwärme, wenn die Zwischenwand Z - wie Fig. 1 entnommen werden kann ― in der Mitte zwischen beiden Gehäuseseitenwänden angeordnet und lediglich glatt ausgebildet ist. Die Zwischenwand ist mit Vorteil thermisch leitend mit einem der Gehäuse, z. B. 1S, verbunden oder ist sogar integraler Bestandteil dieses Gehäuses.

Wie aus Fig. 2 ersichtlich ist, kann in einer weiteren Ausführungsform des Anlagenabschnitts nach der Erfindung parallel zur Zwischenwand Z eine weitere Zwischenwand Z' angeordnet sein. Bei dieser Ausführungsform wird die Wärmeabgabe an die Konvektionsströmung zusätzlich erhöht. Um eine noch bessere Wärmeabgabe zu erzielen, sollten die beiden Zwischenwände durch vertikal geführte Längsrippen verbunden sein.

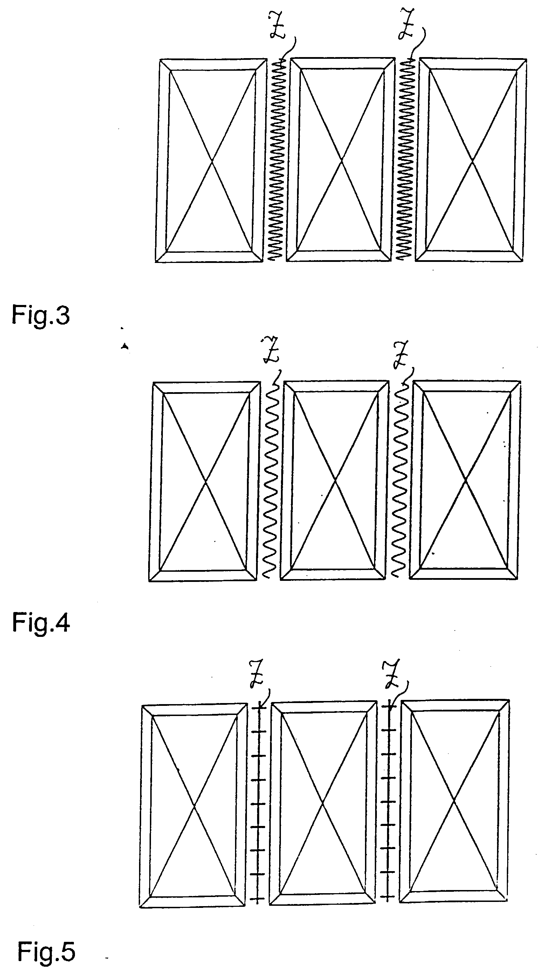

In den aus den Figuren 3 bis 5 entnehmbaren Ausführungsformen weist die Zwischenwand oberflächenvergrössernde Mittel auf, durch welche die Wärmeabgabe an die natürliche Konvektionsströmung zusätzlich verbessert wird. Solche Mittel umfassen mit Vorteil eine Zwischenwand Z mit gewellter Struktur. Die Struktur bildet vertikal geführte Abzugskanäle für die Konvektionsströmung und enthält Wellen, welche eng (Fig.3) oder weit (Fig.4) ausgebildet sein können, oder Längsrippen (Fig.5). Um die freie Konvektionsströmung nicht zu behindern, sollten die Gehäuse 1R und 1S bzw. 1S und 1T einem Mindestabstand voneinander aufweisen.

Zusätzlich kann die Wärmeabgabe durch eine durch die Kanäle 1 RS bzw. ST forciert geführte Strömung verbessert werden. Zu diesem Zweck kann ein bzw. können zwei oder auch mehr diese forcierte Strömung erzeugende(s) Aussengebläse vorgesehen sein. Ein solches Aussengebläse ist in Fig.1 symbolisch als Pfeil dargestellt und mit dem Bezugszeichen G versehen.

### Bezugszeichenliste

- 1R, 1S, 1T: Gehäuse
- L: Stromleiter
- G: Aussengebläse
- R, S, T: Phasen
- RS, ST: Kanäle
- Z, Z': Zwischenwände

## Patentansprüche

1. Abschnitt einer elektrischen Hochspannungsanlage, insbesondere eines Generatorschalters, mit mindestens zwei jeweils einen Stromleiter (L) aufnehmenden Gehäusen (1R, 1S), welche an Gehäuseseitenwänden unter Bildung eines vertikal ausgerichteten Kanals (RS) mit Abstand voneinander angeordnet sind, dadurch gekennzeichnet, dass im Kanal eine parallel zu den Seitenwänden geführte erste Zwischenwand (Z) angeordnet ist.

2. Anlagenabschnitt nach Anspruch 1 mit mindestens drei jeweils einen Stromleiter aufnehmenden Gehäusen (1R, 1S, 1T), welche an Gehäuseseitenwänden unter Bildung von mindestens zwei vertikal ausgerichteten Kanälen (RS, ST) mit Abstand voneinander angeordnet sind, dadurch gekennzeichnet, dass in beiden Kanälen je eine parallel zu den Seitenwänden geführte erste Zwischenwand (Z) angeordnet ist.

3. Anlagenabschnitt nach einem der Ansprüche 1 oder 2, dadurch gekennzeichnet, dass die erste Zwischenwand (Z) oberflächenvergrössernde Mittel aufweist.

4. Anlagenabschnitt nach Anspruch 3, dadurch gekennzeichnet, dass die oberflächenvergrössernden Mittel vertikal geführte Wellen und/oder Längsrippen umfassen.

5. Anlagenabschnitt nach einem der Ansprüche 1 bis 4, dadurch gekennzeichnet, dass in dem mindestens einen Kanal eine parallel zur ersten Zwischenwand (Z) geführte zweite Zwischenwand (Z') angeordnet ist.

6. Anlagenabschnitt nach Anspruch 5, dadurch gekennzeichnet, dass die erste und die zweite Zwischenwand durch vertikal geführte Längsrippen verbunden sind.

7. Anlagenabschnitt nach einem der Ansprüche 1 bis 6, dadurch gekennzeichnet, dass mindestens eine der Erzeugung einer Gasströmung im Kanal dienende Strömungsquelle (G) vorgesehen ist.
